# EUROPEAN PATENT SPECIFICATION

(11) **EP 2 406 551 B1**
(45) Date of publication and mention of the grant of the patent: **17.04.2013**
(21) Application number: 10706215.0
(22) Date of filing: 26.02.2010
(51) Int. Cl.: F25B 30/06, F25D 17/02, F24F 5/00, F25B 27/00

(54) **PLANT FOR HEAT-REGULATING A FIRST FLUID AND A SECOND FLUID USED FOR AIR-CONDITIONING PREMISES**
ANLAGE ZUR WÄRMEREGULIERUNG EINER ERSTEN FLÜSSIGKEIT UND EINER ZWEITEN FLÜSSIGKEIT FÜR KLIMAANLAGENZWECKE
INSTALLATION POUR RÉGULATION DE CHALEUR D'UN PREMIER FLUIDE ET D'UN SECOND FLUIDE UTILISÉE POUR LA CLIMATISATION DE LOCAUX

(30) Priority: 09.03.2009 IT MI20090346
(43) Date of publication of application: 18.01.2012
(73) Proprietor: Eubios S.p.A., 20125 Milano (IT)
(72) Inventor: GHELFI, Tarcisio, I-20125 Milano (IT); POZZI, Alessandro, I-20125 Milano (IT)
(74) Representative: Raimondi, Margherita
(86) International application number: PCT/EP2010/052460
(87) International publication number: WO 2010/102912

(56) References cited:
- WO-A1-2004/023045
- DE-A1- 19 919 605
- DE-A1-102005 013 012
- JP-A- 58 055 633
- US-A- 4 269 263

## Description

The present invention relates to a plant for heat-regulating a first fluid and a second fluid which can be used for the summer/winter air-conditioning of premises.

It is known, in the technical sector relating to air-conditioning of domestic and/or industrial premises, to use air-conditioning machines which, by means of a refrigerating cycle, are able to cool an environment by drawing heat from the inside and dissipating it externally.

These machines function by means of an electrical apparatus (compressor) which is able to perform the compression/expansion operations required for the machine operating cycle.

It is also known that these air-conditioners may operate as heat pumps, namely supplying heat into the internal environment by means of reversal of the cooling fluid cycle, performed by means of reversible valves.

It is also known, however, that these heat pumps are unable to achieve a high operating efficiency since their position outside the premises, i.e. exposed to high summer temperatures and low winter temperatures, adversely affect their performance.

In addition to heat pumps, absorption machines are also known, i.e. apparatus inside which the cooling fluid formed by a special solution comprising a solute and a solvent circulates; the solution is circulated through a first high-pressure zone where, by supplying thermal energy from the outside (generator), evaporation of the solvent takes place, the latter reaching a condenser inside which it changes from the gaseous state into the liquid state, releasing heat to an external fluid (water or air); at this point the cooling liquid passes to an evaporator at a pressure much lower than that of the condenser and starts to draw heat from an external liquid (water) to be cooled, the cooling vapour is absorbed by the concentrated solution and passes to the absorber from where it is conveyed to the generator via a pump, while the condensation and dilution heat is removed by means of cooling water. Another cooling and heating machine is described in patent document US-4 269 263-A.

All the machines described above have intrinsic limitations in terms of efficiency which result in their poor performance since they are essentially designed to function either as summer air-conditioners or as winter heaters.

The technical problem which is posed, therefore, is to provide a plant for heat-regulating fluids able to be used while maintaining a high operating efficiency for both operating cycles, i.e. air-conditioning and heating within a wide range of temperatures which may vary from a few tens of degrees below zero to a few tens of degrees above zero.

In addition, it is also required that the plant should be able to function with substantially zero emission of CO₂.

In connection with this problem it is also required that this plant should have small dimensions, be easy and inexpensive to produce and assemble and be able to be installed easily at any user location. These results are achieved according to the present invention by a plant for heat-regulating a first fluid and second fluid which can be used for the air-conditioning of premises and which comprises: a source of primary thermal energy capable of providing a hot fluid; an absorption refrigerating machine supplied with said hot fluid and comprising a first auxiliary circuit for recirculating said first fluid which exits hot from the absorption machine and returns cold into the same machine; a second auxiliary circuit for recirculating said second fluid which exits cold from the machine and returns hot into the same machine; there being envisaged a heat-exchange mass capable of supplying/absorbing heat, means capable of connecting alternately the first or the second auxiliary circuit of the absorption machine to said thermal mass or to the user appliances for the associated heat exchange; said primary hot fluid being water.

Further details may be obtained from the following description of a non-limiting example of embodiment of the subject of the present invention provided with reference to the accompanying drawings in which:
- Figure 1: shows a schematic diagram of the heat-regulating plant according to the present invention during summertime operation as an air-conditioner;
- Figure 2: shows a schematic diagram of the heat-regulating plant according to the present invention during winter-time operation as a heat pump;
- Figure 3: shows a schematic diagram of the plant according to the present invention complete with flow deviation means for double alternating operation;
- Figures 4a-4e: show examples of embodiment of the means for generating primary thermal energy to be supplied to the plant; and
- Figures 5a-5d: show examples of embodiment of the heat-exchange mass.

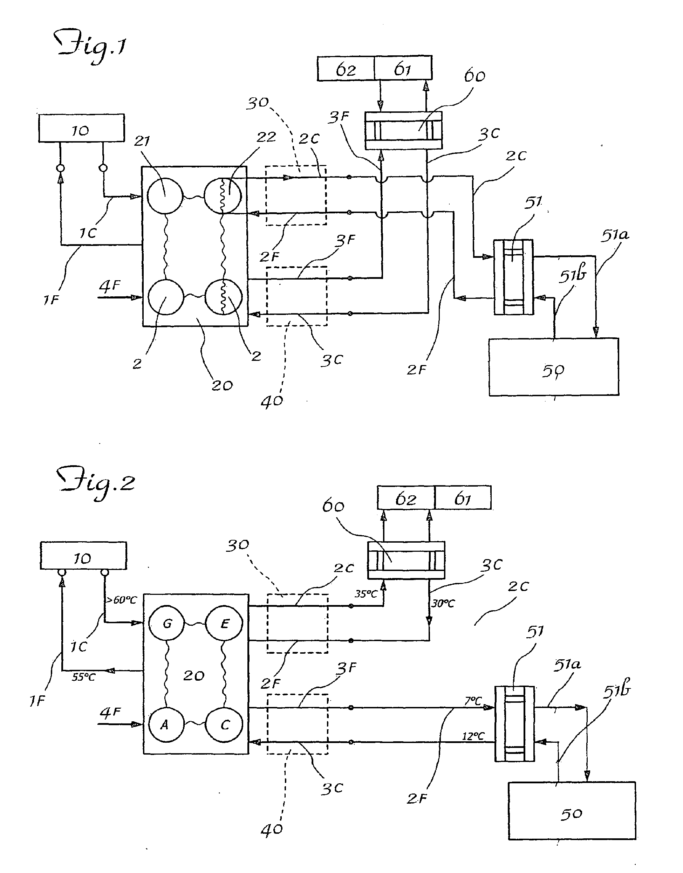

As shown in Fig. 1 which shows the plant according to the invention in a simplified form during summer operation as a cold-fluid supply system for use in air-conditioners, the heat-regulating plant essentially comprises:
- a source 10 of primary thermal energy capable of supplying a hot fluid, preferably hot water, 1C at a temperature of ≥60° C to
- an absorption refrigerating machine 20, preferably of the type with a solution formed by water (cooling H₂O) and lithium bromide (LiBr) or H₂O and silica gel.

The absorption refrigerating machine 20 is substantially conventional and has:
- a generator 21 which is supplied with hot H₂O 1C so as to cause boiling of the solution H₂O-LiBr which, upon boiling, releases water vapour which then passes to
- a condenser 22 in which the vapour condenses, freeing heat which is absorbed by
- a first auxiliary circuit 30 for recirculating a first fluid which exits hot 2C and returns cold 2F into the absorption machine so as to be able to absorb heat again;
- an evaporator 23 in which the pressure is much lower than that of the condenser 22 and inside which the cooling liquid absorbs heat from
- a second auxiliary circuit 40 inside which a second fluid recirculates and exits cold 3F from the evaporator 23 and returns hot 3C so as to release heat to the evaporator;
- an absorber 24 into which the cooling vapour returns and is then absorbed again by the solute of LiBr which is diluted again and is pumped to the generator 21 for a new cycle; cold H₂O 4F recovered for example from 2F is also supplied to the absorber 24.

According to preferred embodiments of the invention, it is envisaged that:
the user appliances which may be a (summer) air-conditioning plant 61 or a (winter) heating plant 62 are connected to a heat exchanger 60 and a second heat exchanger 51 is connected to a heat-exchange mass 50 capable of supplying/absorbing heat depending on the type of summer/winter operation of the plant.

With the configuration described above, the air-conditioning plant may operate in the following modes:

### SUMMER MODE (Fig.1)

In this case the plant must supply the air-conditioners 61 with cold fluid; it is therefore envisaged that:
- cold H₂O 3F supplied from the second auxiliary circuit 40 of the absorption machine 20 enters into the heat exchanger 60 of the user appliances 61 and hot H₂O 3C exits therefrom and returns to the auxiliary circuit in order to supply the evaporator 22 and maintain the cycle of the machine 20;
- hot H₂O 2C supplied from the first auxiliary circuit 30 of the absorption machine 20 enters into the heat exchanger 51 of the thermal mass 50 and cold H₂O 2F exits therefrom, returning to the auxiliary circuit in order to supply the condenser 23 and maintain the cycle of the machine 20.

In this condition the thermal mass 50, which is at a temperature lower than that of the fluid of the first auxiliary circuit circulating inside the exchanger 51, absorbs heat and delivers cooled fluid.

### WINTER MODE (Fig. 2)

In this case the plant must supply the user heating plant 62 with hot fluid; it is therefore envisaged that:
- hot H₂O 2C supplied from the condenser 22 of the absorption machine 20 enters into the heat exchanger 60 of the user appliances 62 and cold H₂O 2F exits therefrom and returns to the condenser 22 in order to maintain the cycle of the machine 20;
- cold H₂O 3F supplied from the condenser 23 of the absorption machine 20 enters into the heat exchanger 51 of the second auxiliary circuit 40 and hot H₂O 3C exits therefrom and returns to the condenser 23 in order to maintain the cycle of the machine 20.

In this condition the thermal mass 50, which is at a temperature higher than that of the fluid circulating in the second auxiliary circuit 51, releases heat and delivers a heated fluid.

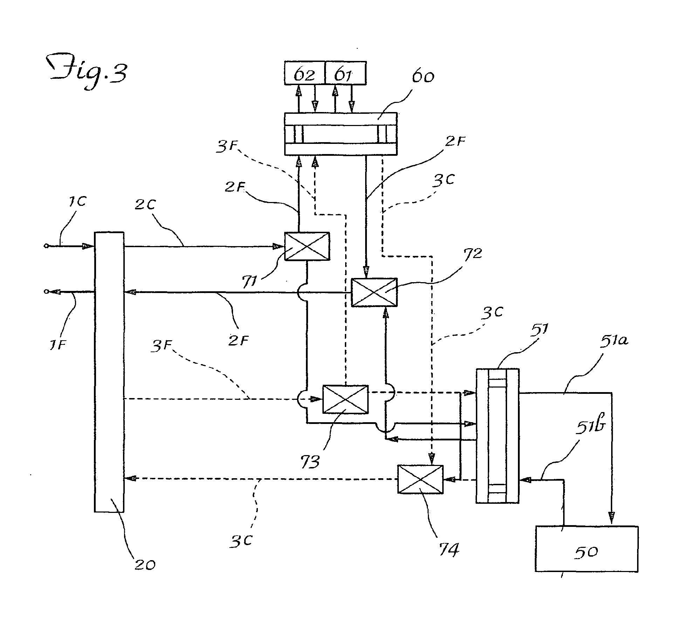

As schematically shown in Fig. 3, the plant is provided with three-way valves 71,72,73,74 arranged along the fluid paths of the auxiliary circuits, i.e. the primary circuit 30 and secondary circuit 40, so as to be able to determine the different summer/winter operation, suitably causing opening/closing of the said valves in order to switch between the path of the fluid 2C-2F of the first auxiliary circuit 30 and the path of the fluid 3F-3C of the second auxiliary circuit 40.

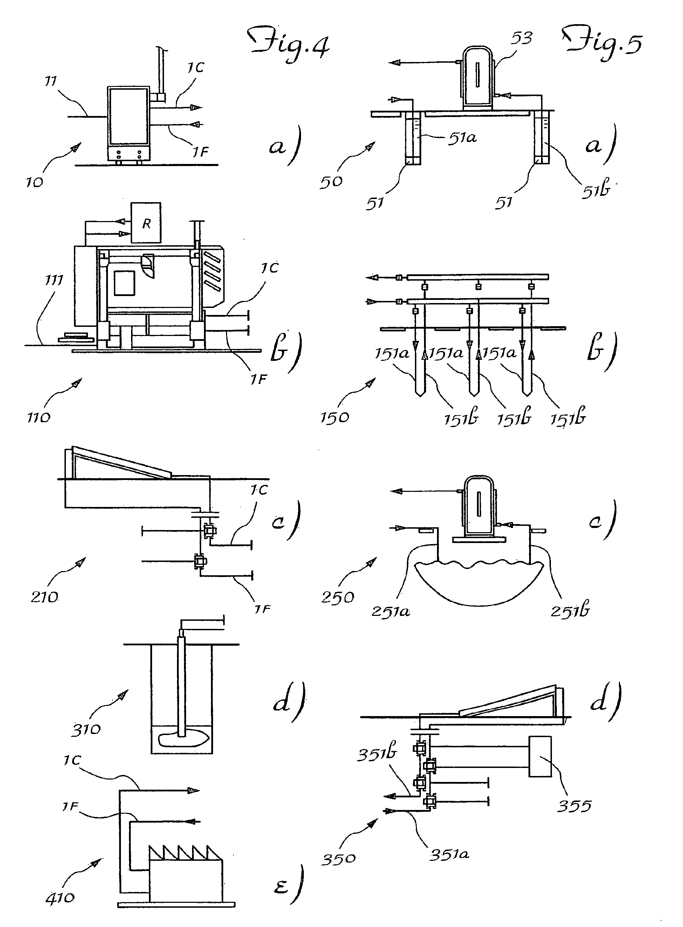

The valves 71,72,73,74 and their operating mode are of the conventional type and within the competence of the person skilled in the art and, although illustrated, will therefore not be described in detail below, replacement of said valves with equivalent controllable means also lying within the competence of the person skilled in the art. According to the invention it also envisaged (Figs. 4a-4d) that the H₂O supplied as the primary energy source to the absorption machine 20 may be obtained in different forms or ways, such as:
- a boiler 10 (fig.4a) supplied with fuel 11 and from/into which hot water 1c/cold water 1f exits/enters.
- a mixed generator 110 of thermal energy and electrical energy which, supplied by fuel 111, delivers hot water 1C and receives cold water 1F and may also supply electrical energy from the mains R;
- an absorber 210 of thermal solar energy (Fig. 4c);
- a high-enthalpy geothermal source 310 such as a thermal source (Fig. 4d);
- thermal energy recovered from a technological and/or remote heating cycle (Fig.4e).

According to the invention it also envisaged (Figs. 5a-5d) that the heat-exchange mass may be obtained using different methods such as:
- a low-enthalpy geothermal source 50 consisting of groundwater wells 51 in which the delivery ducts 51a and take-off ducts 51b are immersed (Fig. 5a);
- a low-enthalpy geothermal mass 150 in which closed circuit probes for delivery 151a and take-off 151b are immersed (Fig. 5b);
- a hydrothermal source 250 in which the delivery ducts 251a and take-off ducts 251b are immersed (Fig. 5c);
- an absorber of thermal solar energy 350 to which delivery ducts 351a and take-off ducts 351b are connected (Fig. 5d).

It is therefore clear how with the plant according to the invention it is possible to use an absorption refrigeration machine, which is known to be used for supplying a cold fluid for summer air-conditioning, also as a so-called heat pump for winter heating, with a substantial increase in the overall efficiency of the plant and without the substantial emission of CO₂ into the atmosphere, the primary energy for climate control being provided without operation-related combustion.

Moreover, owing to the possibility of being able to use in a closed circuit naturally available heat exchange masses and produce primary thermal energy by means of low-cost devices, it is possible to achieve substantial savings with regard to management of the plant.

Although described in connection with certain constructional forms and certain preferred examples of embodiment of the invention, it is understood that the scope of protection of the present patent is defined solely by the following claims.

## Claims

1. Plant for heat-regulating a first fluid (2C,2F) and a second fluid (3F,3C) for the air-conditioning of premises, comprising:
- a source (10;110;210;310;410) of primary thermal energy capable of providing a hot fluid (1C),
- an absorption refrigerating machine (20) supplied with said hot fluid (1C) ;
- a first auxiliary circuit (30) for recirculating said first fluid (2C,2F), which exits hot (2C) from the absorption machine (20) and returns cold (2F) into the same machine;
- a second auxiliary circuit (40) for recirculating said second fluid (3F,3C), which exits cold (3F) from the machine and returns hot (3C) into the same machine;
**characterized in that** it comprises:
- a heat-exchange mass (50;150;250;350) capable of supplying/absorbing heat,
- means (71,72,73,74) capable of connecting alternately the first auxiliary circuit (30) or the second auxiliary circuit (40) of the absorption machine (20) to said thermal mass (50;150;250;350) or to the user appliances (61,62) for the associated heat exchange;
- said primary hot fluid (1C) is hot water.

2. Plant according to Claim 1, **characterized in that** said absorption machine (20) is of the type with a solution formed by water (H₂O) and lithium bromide (LiBr).

3. Plant according to Claim 1, **characterized in that** said absorption machine (20) is of the type with a solution formed by water (H₂O) and silica gel.

4. Plant according to Claim 1, **characterized in that** it comprises a heat exchanger (60) arranged between the first auxiliary circuit (30) and user appliances (61,62).

5. Plant according to Claim 1, **characterized in that** it comprises a heat exchanger (51) arranged between the second auxiliary circuit (40) and the heat-exchange mass (50).

6. Plant according to Claim 1, **characterized in that** said means (71,72,73,74) capable of connecting alternately the first auxiliary circuit (30) or the second auxiliary circuit (40) of the absorption machine (20) to said thermal mass (50) or to the user appliances (61,62) are three-way valves.

7. Plant according to Claim 1, **characterized in that** said absorption machine (20) is supplied with H₂O at a temperature ≥ 60°C.

8. Plant according to Claim 1, **characterized in that** said user appliances comprise an air-conditioning plant (61).

9. Plant according to Claim 1, **characterized in that** said user appliances comprise a heating plant (62).

10. Plant according to Claim 1, **characterized in that** said primary thermal energy source is a boiler (10) supplied with fuel (11) and from/into which hot water (1C)/cold water (1F) exits/enters.

11. Plant according to Claim 1, **characterized in that** said primary thermal energy source is a mixed generator (110) of thermal and electrical energy.

12. Plant according to Claim 1, **characterized in that** said primary thermal energy source is an absorber (210) of thermal solar energy.

13. Plant according to Claim 1, **characterized in that** said primary thermal energy source is a high-enthalpy geothermal source (310).

14. Plant according to Claim 1, **characterized in that** said primary thermal energy source is a technological and/or remote heating plant (410).

15. Plant according to Claim 1, **characterized in that** said heat-exchange mass is a low-enthalpy geothermal source (50;150).

16. Plant according to Claim 1, **characterized in that** said heat-exchange mass is a hydrothermal source (250).

17. Plant according to Claim 1, **characterized in that** said heat-exchange mass is an absorber (350) of thermal solar energy.

18. Use of a plant according to Claim 1 as a heat pump.

## Patentansprüche

1. Anlage zur Wärmeregulierung eines ersten Fluids (2C, 2F) und eines zweiten Fluids (3F, 3C) für die Klimatisierung von Räumlichkeiten, umfassend:
eine Quelle (10, 110, 210, 310, 410) von primärer thermischer Energie, welche geeignet ist, ein heisses Fluid (1C) bereitzustellen;
eine Absorptionskältemaschine (20), welcher das heisse Fluid (1C) zugeführt wird;
ein erster Hilfskreislauf (30) zur Rückführung des ersten Fluids (2C, 2F), welches heiss (2C) aus der Absorptionsmaschine (20) austritt und kalt (2F) in dieselbe Maschine zurückkehrt;
ein zweiter Hilfskreislauf (40) zur Rückführung des zweiten Fluids (3F, 3C), welches kalt (3F) aus der Maschine austritt und heiss (3C) in dieselbe Maschine zurückkehrt,
**dadurch gekennzeichnet, dass** die Anlage umfasst:
eine Wärmeaustauschmasse (50, 150, 250, 350), welche zur Zuführung/Absorption von Wärme geeignet ist;
Mittel (71, 72, 73, 74), welche dazu geeignet sind, alternierend den ersten Hilfskreislauf (30) oder den zweiten Hilfskreislauf (40) der Absorptionsmaschine (20) mit der thermischen Masse (50, 150, 250, 350) oder mit Benutzergeräten (61, 62) für den zugeordneten Wärmeaustausch zu verbinden; wobei
das primäre heisse Fluid (1 C) heisses Wasser ist.

2. Anlage nach Anspruch 1, **dadurch gekennzeichnet, dass** die Absorptionsmaschine (20) von dem Typ mit einer durch Wasser (H₂O) und Lithiumbromid (LiBr) gebildeten Lösung ist.

3. Anlage nach Anspruch 1, **dadurch gekennzeichnet, dass** die Absorptionsmaschine (20) von dem Typ mit einer durch Wasser (H₂O) und Silicagel gebildeten Lösung ist.

4. Anlage nach Anspruch 1, **dadurch gekennzeichnet, dass** die Anlage einen zwischen dem ersten Hilfskreislauf (30) und Benutzergeräten (61, 62) angeordneten Wärmetauscher (60) umfasst.

5. Anlage nach Anspruch 1, **dadurch gekennzeichnet, dass** die Anlage einen zwischen dem zweiten Hilfskreislauf (40) und der Wärmeaustauschmasse (50) angeordneten Wärmetauscher (51) umfasst.

6. Anlage nach Anspruch 1, **dadurch gekennzeichnet, dass** die Mittel (71, 72, 73, 74), welche dazu geeignet sind, alternierend den ersten Hilfskreislauf (30) oder den zweiten Hilfskreislauf (40) der Absorptionsmaschine (20) mit der thermischen Masse (50, 150, 250, 350) oder mit Benutzergeräten (61,62) zu verbinden, Dreiwegeventile sind.

7. Anlage nach Anspruch 1, **dadurch gekennzeichnet, dass** der Absorptionsmaschine (20) H₂O mit einer Temperatur ≥ 60 °C zugeführt wird.

8. Anlage nach Anspruch 1, **dadurch gekennzeichnet, dass** die Benutzergeräte eine Klimaanlage (61) umfassen.

9. Anlage nach Anspruch 1, **dadurch gekennzeichnet, dass** die Benutzergeräte eine Heizanlage (62) umfassen.

10. Anlage nach Anspruch 1, **dadurch gekennzeichnet, dass** die primäre thermische Energiequelle ein Boiler (10) ist, dem Treibstoff (11) zugeführt wird und aus dem / in den heisses Wasser (1 C) / kaltes Wasser (1 F) austritt / eintritt.

11. Anlage nach Anspruch 1, **dadurch gekennzeichnet, dass** die primäre thermische Energiequelle ein gemischter Generator (110) von thermischer und elektrischer Energie ist.

12. Anlage nach Anspruch 1, **dadurch gekennzeichnet, dass** die primäre thermische Energiequelle ein Absorber (210) von thermischer Solarenergie ist.

13. Anlage nach Anspruch 1, **dadurch gekennzeichnet, dass** die primäre thermische Energiequelle eine geothermische Quelle (310) mit hoher Enthalpie ist.

14. Anlage nach Anspruch 1, **dadurch gekennzeichnet, dass** die primäre thermische Energiequelle eine technologische und / oder Fernwärmeanlage (410) ist.

15. Anlage nach Anspruch 1, **dadurch gekennzeichnet, dass** die Wärmetauschmasse eine geothermischen Quelle (50, 150) mit niedriger Enthalpie ist.

16. Anlage nach Anspruch 1, **dadurch gekennzeichnet, dass** die Wärmetauschmasse eine hydrothermale Quelle (250) ist.

17. Anlage nach Anspruch 1, **dadurch gekennzeichnet, dass** die Wärmetauschmasse ein Absorber (350) von thermischer Solarenergie ist.

18. Verwendung einer Anlage nach Anspruch 1 als Wärmepumpe.

## Revendications

1. Installation servant à la régulation de chaleur d'un premier fluide (2C, 2F) et d'un second fluide (3F, 3C) utilisée pour la climatisation des locaux, comportant :
- une source (10 ; 110 ; 210 ; 310 ; 410) d'énergie thermique primaire capable de fournir un fluide chaud (1C),
- une machine frigorifique à absorption (20) alimentée avec ledit fluide chaud (1C) ;
- un premier circuit auxiliaire (30) pour recycler ledit premier fluide (2C, 2F), lequel sort chaud (2C) de la machine à absorption (20) et revient froid (2F) dans cette même machine ;
- un second circuit auxiliaire (40) pour recycler ledit second fluide (3F, 3C), lequel sort froid (3F) de la machine et revient chaud (3C) dans cette même machine; **caractérisée en ce qu'**elle comporte :
- une masse d'échange thermique (50 ; 150 ; 250 ; 350) capable de fournir/d'absorber de la chaleur,
- des moyens (71, 72, 73, 74) capable de raccorder alternativement le premier circuit auxiliaire (30) ou le second circuit auxiliaire (40) de la machine à absorption (20) à ladite masse thermique (50 ; 150 ; 250 ; 350) ou à des appareils utilisateurs (61, 62) en vue de l'échange thermique associé ;
- ledit fluide chaud primaire (1C) est de l'eau chaude.

2. Installation selon la revendication 1, **caractérisée en ce que** ladite machine à absorption (20) est du type comportant une solution formée par de l'eau (H₂O) et du bromure de lithium (LiBr).

3. Installation selon la revendication 1, **caractérisée en ce que** ladite machine à absorption (20) est du type comportant une solution formée par de l'eau (H₂O) et du gel de silice.

4. Installation selon la revendication 1, **caractérisée en ce qu'**elle comprend un échangeur de chaleur (60) agencé entre le premier circuit auxiliaire (30) et des appareils utilisateurs (61, 62).

5. Installation selon la revendication 1, **caractérisée en ce qu'**elle comprend un échangeur de chaleur (51) agencé entre le second circuit auxiliaire (40) et la masse d'échange thermique (50).

6. Installation selon la revendication 1, **caractérisée en ce que** lesdits moyens (71, 72, 73, 74) capables de raccorder alternativement le premier circuit auxiliaire (30) ou le second circuit auxiliaire (40) de la machine à absorption (20) avec ladite masse thermique (50) ou aux appareils utilisateurs (61, 62) sont des vannes à trois voies.

7. Installation selon la revendication 1, **caractérisée en ce que** ladite machine à absorption (20) est alimentée avec H₂O à une température ≥ 60° C.

8. Installation selon la revendication 1, **caractérisée en ce que** lesdits appareils utilisateurs comportent une installation de conditionnement d'air (61).

9. Installation selon la revendication 1, **caractérisée en ce que** lesdits appareils utilisateurs comportent une installation de chauffage (62).

10. Installation selon la revendication 1, **caractérisée en ce que** ladite source primaire d'énergie thermique est une chaudière (10) alimentée avec du combustible (11) et à partir de laquelle / dans laquelle de l'eau chaude (1 C) / de l'eau froide (1 F) entre/sort.

11. Installation selon la revendication 1, **caractérisée en ce que** ladite source primaire d'énergie thermique est un générateur mixte (110) d'énergie thermique et électrique.

12. Installation selon la revendication 1, **caractérisée en ce que** ladite source primaire d'énergie thermique est un absorbeur (210) d'énergie thermique solaire.

13. Installation selon la revendication 1, **caractérisée en ce que** ladite source primaire d'énergie thermique est une source géothermique à enthalpie élevée (310).

14. Installation selon la revendication 1, **caractérisée en ce que** ladite source primaire d'énergie thermique est une installation de chauffage technologique et/ou distante (410).

15. Installation selon la revendication 1, **caractérisée en ce que** ladite masse d'échange thermique est une source géothermique à faible enthalpie (50 ; 150).

16. Installation selon la revendication 1, **caractérisée en ce que** ladite masse d'échange thermique est une source hydrothermale (250).

17. Installation selon la revendication 1, **caractérisée en ce que** ladite masse d'échange thermique est un absorbeur (350) d'énergie thermique solaire.

18. Utilisation d'une installation selon la revendication 1 comme pompe à chaleur.
